# EUROPEAN PATENT SPECIFICATION

(11) **EP 3 298 314 B1**
(45) Date of publication and mention of the grant of the patent: **27.03.2019**
(21) Application number: 16744875.2
(22) Date of filing: 10.05.2016
(51) Int. Cl.: F16L 5/04, A62C 2/06, H02G 3/04, H02G 3/22

(54) **ADJUSTABLE FIRE STOP COLLAR**
VERSTELLBARE BRANDSCHUTZHÜLSE
DOUILLE COUPE-FEU AJUSTABLE

(30) Priority: 20.05.2015 NL 2014831
(43) Date of publication of application: 28.03.2018
(73) Proprietor: J. van Walraven Holding B.V., 3641 RK Mijdrecht (NL)
(72) Inventor: NIJDAM, Frank, 3893 BA Zeewolde (NL); VERMEULEN, Constantinus Paulinus Johannes Maria, 3053 ZN Rotterdam (NL)
(74) Representative: EP&C
(86) International application number: PCT/NL2016/050331
(87) International publication number: WO 2016/186486

(56) References cited:
- EP-A2- 1 780 456
- WO-A1-01/09538
- DE-U1- 9 418 172
- DE-U1-202007 000 727
- US-B2- 7 581 362

## Description

The present invention relates to a fire stop sleeve for arrangement in a passage for a conduit or cable or the like in a partition such as a wall or a ceiling, the fire stop sleeve comprising an outer casing, preferably made of metal, and intumescent material arranged on a radially inner side of the outer casing, wherein the casing comprises at least two interconnected coaxial casing portions which have at least overlapping end portions and which are slidable with respect to each other to extend or reduce the length of the sleeve to adjust the length to a thickness of the partition.

US 7.581.362 discloses a telescoping tube comprising two collinear tubular sections which are enabled for sliding extension so that the tube is able to adjusted in length to the desired size of walls of varying thickness. The known tube has end flanges in particular used for being fastened to the forms prior to concrete pour to form the wall. One or more coils of intumescent material are placed within the tube adjacent one of the open ends of the tube. In the resulting structure the tube is integral with the concrete wall and receives utility pipes or conduits such that conductors may be easily placed between compartments separated by the wall.

EP 1 780 456 discloses a passage assembly for conduits which can be fixed to a formwork for pouring concrete. In one embodiment the assembly comprises a central tube with on the outer side a male thread and two base portions having a tubular portion with a female thread cooperating with the male thread of the hollow tube. The base portion have a flange which can be fixed to the formwork. The base portions have an accommodation space in which intumescent material is accommodated. The length of assembly can be modified to the thickness of the concrete wall or floor to be poured, by cutting the central tube to length. Next the base portions can be screwed on the ends of the central tube.

The invention has for an object to provide an improved fire stop sleeve.

This object is achieved by a fire stop sleeve according to claim 1.

Because the fire stop sleeve according to the invention has at least two strips of intumescent material, one on each end, a quick closing of the passage through the partition is ensured at either side of the partition in case of a fire. This provides a better fire safety.

According to invention the casing portions are interconnected by an axially extending guiding structure which includes a stop that determines the maximal extension of the sleeve. This ensures that the sleeve portions are not separated from each other when extended. In particular the guiding structure includes at least an axial guiding slot in one of the casing portions and a guiding protrusion provided on another casing portion which protrusion is slidingly arranged in the guiding slot.

In a preferred embodiment the at least one circumferentially extending strip of intumescent material is arranged at an axial end of said axially outer casing portion remote from the overlapping end portion. By this feature the intumescent material is located as close as possible to the location where a fire hazard may come from.

In a possible embodiment the casing comprises one central casing portion and two axially outer casing portions which are arranged coaxially and at least partially within the central casing portion.

In a preferred embodiment the casing comprises one central casing portion and two axially outer casing portions which are arranged coaxially and at least partially within the central casing portion, wherein the central casing portion is provided with at least one guiding slot, and wherein the outer casing portions are each provided with a guiding protrusion slidingly arranged in a corresponding guiding slot in the central casing portion. The guiding slot may be an axial guiding slot, but may also be a slot that extends in both the axial and the circumferential direction, such as a helix.

The outer casing portions are provided at the axially outer ends thereof with a circumferentially extending strip of intumescent material. There may however also be more strips of intumescent material. The advantage is that the end portions of the sleeve have the intumescent material on the inner side, whereas the intermediate portions can be made without intumescent material, which is a cost saving structure. In the prior art there are known one piece sleeves, which are entirely covered on the inner side with intumescent material. These are expensive with respect to the sleeve according to the present invention because of the great amount of the expensive intumescent material applied in them.

The casing that according to the invention exist of two or more casing portions limits the thermal conductivity of the casing which improves the fire safety. However, also additional thermally isolating measures can be provided. For example in the embodiment with the central casing the central casing may be provided with a line of perforations which extends in the circumferential direction, whereby the surface through which heat is conducted in the axial direction is reduced.

In a particular embodiment of the sleeve according to the invention the casing has a longitudinal slit where the casing can be opened such that the sleeve can be arranged around the conduit or cable, and the casing has retaining elements to keep the casing closed when it is arranged around the conduit or cable. This has the advantage that the fire stop sleeve can be retrofitted around an existing pipe or conduit and then be arranged in the passage through the partition.

The invention also relates to a method wherein the fire stop sleeve as is described in the above is arranged in an existing passage for a conduit or cable or the like in a partition such as a wall or a ceiling, wherein the length of the fire stop sleeve is extended or reduced by slidingly moving the sleeve parts with respect to each other so as to make the length of the sleeve corresponding substantially to the thickness of the partition.

In particular in the method the sleeve may be arranged around an existing pipe which extends through said passage in the partition.

The invention will be elucidated in the following detailed description of a preferred embodiment with reference to the drawing, wherein:
Fig. 1 shows a view in perspective of a preferred embodiment of a fire stop sleeve according to the invention in a short state;
Fig. 2 shows a view in perspective of the fire stop sleeve of Fig. 1 in a fully extended state;
Fig. 3 shows a cutaway view in perspective of the sleeve of Fig. 1 in the short state corresponding to Fig. 1;
Fig. 4 shows a cutaway view in perspective of the sleeve of Fig. 1 in a more extended state;
Fig. 5 shows a cutaway view in perspective of the sleeve of Fig. 1 in a most extended state corresponding to Fig. 2.

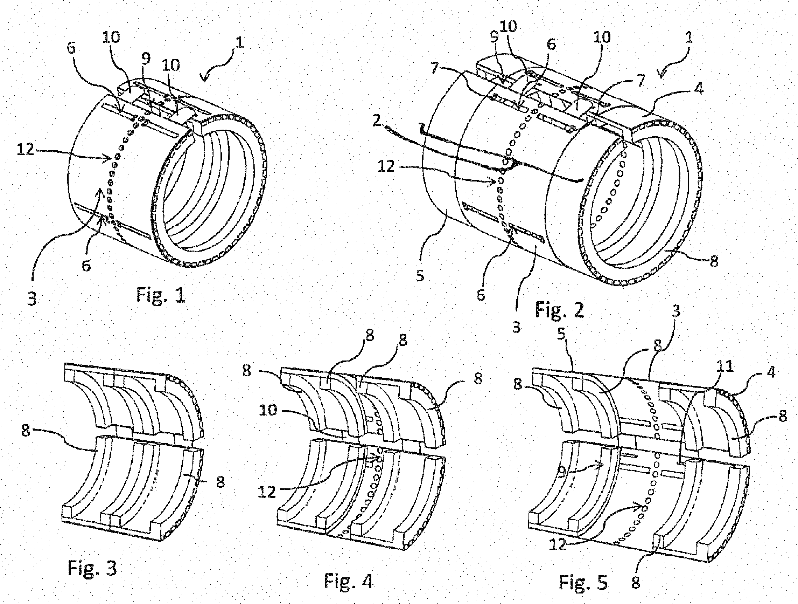

Figs. 1 - 5 shows a fire stop sleeve 1 comprising a metal casing 2. The metal casing 2 comprises one central metal casing portion 3 and two axially outer metal casing portions 4, 5. The axially outer casing portions 4, 5 are arranged coaxially and at least partially within the central casing portion 3.

The central casing portion 3 is provided with pairs of axial guiding slots 6. The guiding slots 6 extend in a axial direction and the slots 6 of each pair are aligned. The outer casing portions 4, 5 are each provided on the outer side with a guiding protrusion 7 slidingly arranged in a corresponding guiding slot 6 in the central casing portion 3. The central casing portion 6 may be provided with four pairs of axial slots 6 distributed over the circumference of the central casing portion 3. The resulting axially extending guiding structure includes a stop when the protrusion 7 abuts the end of the slot 6 which determines the maximal extension of the sleeve 1 (cf. Fig. 2).

In a possible alternative embodiment according to the invention, it is conceivable that the axially extending guiding structure comprises helical slots instead of pure axial slots.

Each of the outer casing portions 4 and 5 is provided with strips 8, in this case two strips, of intumescent material on the inner side. The strips 8 are mutually spaced apart and one is on the axial outer end of the outer casing portion 4, 5 and one is on the axial inner end of the outer casing portion 4, 5. The strips 8 extend in the circumferential direction on the inner circumference of the casing portion 4, 5.

The central casing portion 3 and the outer casing portions each have a longitudinal slit 9 which are aligned with each other, whereby the casing 2 as a whole can be opened such that the sleeve 1 can be arranged around the conduit or cable. The central casing portion 3 is provided with retaining lips 10 and retaining slots 11 which can cooperate with each other to keep the casing 2 in a closed state around a pipe, conduit or the like.

The fire stop sleeve 1 may be transported in the compact state that is shown in Fig. 1. The length may for example be 100mm. The two outer casing portions abut each other within the central casing portion 3. If the wall through which the sleeve is to be arranged is thicker tan 100mm, the sleeve can be extended by moving the outer casing portions 4, 5 apart. In Fig. 4 is indicated that the casing portions 4 and 5 are moved apart and the total length would be about 125mm. In Fig. 5 is shown the state in which the sleeve is fully extended to about 180mm.

It is noted that the lengths dimension mentioned are only given as an indication of practical dimensions and must not be considered as limiting or essential.

The central casing portion is in the axial centre thereof provided with a circumferentially extending perforation line 12, which provides a reduction of the heat conductivity of the metal casing in the axial direction, because it reduces the total area through which heat can be conducted in the metal casing.

## Claims

1. Fire stop sleeve (1) for arrangement in a passage for a conduit or cable or the like in a partition such as a wall or a ceiling, the fire stop sleeve (1) comprising an outer casing (2) and intumescent material (8) arranged on a radially inner side of the outer casing, wherein the casing comprises at least two interconnected coaxial casing portions (3, 4, 5) which have at least overlapping end portions and which are slidable with respect to each other to extend or reduce the length of the sleeve (1) to adjust the length to a thickness of the partition, at least one circumferentially extending strip (8) of intumescent material being arranged on the inner side of each of the casing portions (4, 5) that are axially most outwardly located, **characterised in that** the casing portions (3, 4, 5) are interconnected by an axially extending guiding structure which includes a stop that determines the maximal extension of the sleeve (1), said guiding structure including at least an axial guiding slot (6) in one of the casing portions (3) and a guiding protrusion (7) provided on another casing portion (4, 5) which protrusion (7) is slidingly arranged in the guiding slot (6).

2. Fire stop sleeve according to claim 1, wherein said at least one circumferentially extending strip (8) of intumescent material is arranged at an axial end of said axially outer casing portion (4, 5) remote from the overlapping end portion.

3. Fire stop sleeve according to any one of the claims 1 - 2, wherein the casing comprises one central casing portion (3) and two axially outer casing portions (4, 5) which are arranged coaxially and at least partially within the central casing portion (3).

4. Fire stop sleeve according to claim 3, wherein the central casing portion (3) is provided with at least one of the axial guiding slots (6), and wherein the outer casing portions (4, 5) are each provided with a guiding protrusion (7) slidingly arranged in a corresponding guiding slot (6) in the central casing portion (3).

5. Fire stop sleeve according to any one of the preceding claims, wherein the casing has a longitudinal slit (9) where the casing (2) can be opened such that the sleeve (1) can be arranged around the conduit or cable, and the casing (2) has retaining elements (10) to keep the casing (2) closed when it is arranged around the conduit or cable.

6. Fire stop sleeve according to any one of the preceding claims, wherein the casing (2) is made of metal.

7. Fire stop sleeve (1) for arrangement in a passage for a conduit or cable or the like in a partition such as a wall or a ceiling, the fire stop sleeve (1) comprising an outer casing (2) and intumescent material (8) arranged on a radially inner side of the outer casing, wherein the casing comprises at least two interconnected coaxial casing portions (3, 4, 5) which have at least overlapping end portions and which are slidable with respect to each other to extend or reduce the length of the sleeve (1) to adjust the length to a thickness of the partition, at least one circumferentially extending strip (8) of intumescent material being arranged on the inner side of each of the casing portions (4, 5) that are axially most outwardly located, wherein the casing comprises one central casing portion (3) and two axially outer casing portions (4, 5) which are arranged coaxially and at least partially within the central casing portion (3), wherein the casing portions (3, 4, 5) are interconnected by an axially and circumferentially extending guiding structure which includes a stop that determines the maximal extension of the sleeve (1), said guiding structure including at least a guiding slot (6) in the central casing portion (3) and a guiding protrusion (7) provided on each of the outer casing portions (4, 5) which protrusions (7) are slidingly arranged in the guiding slot (6), wherein the guiding slot (6) extends in both the axial and the circumferential direction.

8. Method for installation of a fire stop sleeve (1) according to any of the preceding claims, wherein the fire stop sleeve (1) is arranged in an existing passage for a conduit or cable or the like in a partition such as a wall or a ceiling, wherein the length of the fire stop sleeve (1) is extended or reduced by slidingly moving the sleeve parts (3, 4, 5) with respect to each other so as to make the length of the sleeve (1) corresponding substantially to the thickness of the partition.

## Patentansprüche

1. Brandschutzhülse (1) zur Anordnung in einem Durchgang für eine Leitung oder ein Kabel oder dergleichen in einer Abtrennung, wie etwa einer Wand oder einer Decke, wobei die Brandschutzhülse (1) einen Außenmantel (2) und intumeszentes Material (8) umfasst, das auf einer radial inneren Seite des Außenmantels angeordnet ist, wobei der Mantel mindestens zwei miteinander verbundene koaxiale Mantelabschnitte (3, 4, 5) umfasst, die zumindest überlappende Endabschnitte haben, und die in Bezug aufeinander gleitbeweglich sind, um die Länge der Hülse (1) zu verlängern oder zu verkürzen, um die Länge an eine Dicke der Abtrennung anzupassen, wobei mindestens ein sich umfänglich erstreckender Streifen (8) aus intumeszentem Material auf der Innenseite jeweils der Mantelabschnitte (4, 5) angeordnet ist, die sich axial am weitesten außen befinden, **dadurch gekennzeichnet, dass** die Mantelabschnitte (3, 4, 5) durch eine sich axial erstreckende Führungsstruktur miteinander verbunden sind, die einen Anschlag enthält, der die maximale Verlängerung der Hülse (1) bestimmt, wobei die Führungsstruktur mindestens einen axialen Führungsschlitz (6) in einem der Mantelabschnitte (3) und einen Führungsvorsprung (7) enthält, der am anderen Mantelabschnitt (4, 5) vorgesehen ist, welcher Vorsprung (7) gleitbeweglich im Führungsschlitz (6) angeordnet ist.

2. Brandschutzhülse nach Anspruch 1, wobei der sich umfänglich erstreckende Streifen (8) aus intumeszentem Material an einem axialen Ende des axial äußeren Mantelabschnitts (4, 5) beabstandet vom überlappenden Endabschnitt angeordnet ist.

3. Brandschutzhülse nach einem der Ansprüche 1 bis 2, wobei der Mantel einen zentralen Mantelabschnitt (3) und zwei axial äußere Mantelabschnitte (4, 5) umfasst, die koaxial und zumindest teilweise in dem zentralen Mantelabschnitt (3) angeordnet sind.

4. Brandschutzhülse nach Anspruch 3, wobei der zentrale Mantelabschnitt (3) mit mindestens einem der axialen Führungsschlitze (6) versehen ist, und wobei die äußeren Mantelabschnitte (4, 5) jeweils mit einem Führungsvorsprung (7) versehen sind, der gleitbeweglich in einem entsprechenden Führungsschlitz (6) im zentralen Mantelabschnitt (3) angeordnet ist.

5. Brandschutzhülse nach einem der vorhergehenden Ansprüche, wobei der Mantel einen Längsschlitz (9) hat, an dem der Mantel (2) geöffnet werden kann, so dass die Hülse (1) um die Leitung oder das Kabel herum angeordnet werden kann, und der Mantel Rückhalteelemente (10) hat, um den Mantel (2) geschlossen zu halten, wenn er um die Leitung oder das Kabel herum angeordnet ist.

6. Brandschutzhülse nach einem der vorhergehenden Ansprüche, wobei der Mantel (2) aus Metall hergestellt ist.

7. Brandschutzhülse (1) zur Anordnung in einem Durchgang für eine Leitung oder ein Kabel oder dergleichen in einer Abtrennung, wie etwa einer Wand oder einer Decke, wobei die Brandschutzhülse (1) einen Außenmantel (2) und intumeszentes Material (8) umfasst, das auf einer radial inneren Seite des Außenmantels angeordnet ist, wobei der Mantel mindestens zwei miteinander verbundene koaxiale Mantelabschnitte (3, 4, 5) umfasst, die zumindest überlappende Endabschnitte haben, und die in Bezug aufeinander gleitbeweglich sind, um die Länge der Hülse (1) zu verlängern oder zu reduzieren, um die Länge an eine Dicke der Abtrennung anzupassen, wobei mindestens ein sich umfänglich erstreckender Streifen (8) aus intumeszentem Material auf der Innenseite jeweils der Mantelabschnitte (4, 5) angeordnet ist, die sich axial am weitesten außen befinden, wobei der Mantel einen zentralen Mantelabschnitt (3) und zwei axial äußere Mantelabschnitte (4, 5) umfasst, die koaxial und zumindest teilweise in dem zentralen Mantelabschnitt (3) angeordnet sind, wobei die Mantelabschnitte (3, 4, 5) durch eine sich axial und umfänglich erstreckende Führungsstruktur miteinander verbunden sind, die einen Anschlag enthält, der die maximale Verlängerung der Hülse (1) bestimmt, wobei die Führungsstruktur zumindest einen Führungsschlitz (6) im zentralen Mantelabschnitt (3) und einen Führungsvorsprung (7) enthält, der an jedem der äußeren Mantelabschnitte (4, 5) vorgesehen ist, welche Vorsprünge (7) gleitbeweglich im Führungsschlitz (6) angeordnet sind, wobei sich der Führungsschlitz (6) sowohl in der axialen als auch der umfänglichen Richtung erstreckt.

8. Verfahren zum Installieren einer Brandschutzhülse (1) nach einem der vorhergehenden Ansprüche, wobei die Brandschutzhülse (1) in einem bestehenden Durchgang für eine Leitung oder ein Kabel oder dergleichen in einer Abtrennung, wie etwa einer Decke oder Wand, angeordnet wird, wobei die Länge der Brandschutzhülse (1) verlängert oder verkürzt wird, indem die Hülsenteile (3, 4, 5) in Bezug aufeinander gleitend bewegt werden, um zu bewirken, dass die Länge der Hülse (1) im Wesentlichen der Dicke der Abtrennung entspricht.

## Revendications

1. Manchon (1) coupe-feu destiné à être disposé dans un passage pour un conduit, un câble ou similaire dans une cloison telle qu'un mur ou un plafond, le manchon coupe-feu (1) comprenant un boîtier (2) extérieur et du matériau intumescent (8) disposé sur un côté radialement intérieur du boîtier extérieur, dans lequel le boîtier comprend au moins deux parties (3, 4, 5) de boîtier coaxiales interconnectées qui comportent au moins des parties d'extrémités qui se chevauchent et qui peuvent coulisser l'une par rapport à l'autre pour augmenter ou réduire la longueur du manchon (1) afin d'ajuster la longueur à une épaisseur de la cloison, au moins une bande (8) de matériau intumescent s'étendant de manière circonférentielle étant disposée sur le côté intérieur de chacune des parties (4, 5) de boîtier situées axialement le plus à l'extérieur, **caractérisé en ce que** les parties (3, 4, 5) de boîtier sont interconnectées par une structure de guidage s'étendant axialement qui comprend une butée qui détermine l'extension maximale du manchon (1), ladite structure de guidage incluant au moins une fente (6) de guidage axial dans l'une des parties (3) de boîtier et une saillie (7) de guidage prévue sur une autre partie (4, 5) de boîtier, laquelle saillie (7) est agencée de manière coulissante dans la fente (6) de guidage.

2. Manchon coupe-feu selon la revendication 1, dans lequel ladite au moins une bande (8) de matériau intumescent s'étendant de manière circonférentielle est disposée à une extrémité axiale de ladite partie (4, 5) de boîtier axialement extérieure et à distance de la partie d'extrémité chevauchante.

3. Manchon coupe-feu selon l'une quelconque des revendications 1 et 2, dans lequel le boîtier comprend une partie (3) centrale de boîtier et deux parties (4, 5) de boîtier axialement extérieures qui sont disposées de manière coaxiale et au moins partiellement à l'intérieur de la partie (3) centrale de boîtier.

4. Manchon coupe-feu selon la revendication 3, dans lequel la partie (3) centrale de boîtier est munie d'au moins l'une des fentes (6) de guidage axial, et dans lequel les parties (4, 5) de boîtier extérieures sont chacune pourvues d'une saillie (7) de guidage agencée de manière coulissante dans une fente (6) de guidage correspondante dans la partie (3) centrale de boîtier.

5. Manchon coupe-feu selon l'une quelconque des revendications précédentes, dans lequel le boîtier présente une fente (9) longitudinale dans laquelle le boîtier (2) peut être ouvert de telle sorte que le manchon (1) puisse être disposé autour du conduit ou du câble, et le boîtier (2) comporte des éléments (10) de retenue pour maintenir le boîtier (2) fermé lorsqu'il est disposé autour du conduit ou du câble.

6. Manchon coupe-feu selon l'une quelconque des revendications précédentes, dans lequel le boîtier (2) est en métal.

7. Manchon (1) coupe-feu destiné à être disposé dans un passage pour un conduit ou un câble ou similaire dans une cloison telle qu'un mur ou un plafond, le manchon coupe-feu (1) comprenant un boîtier (2) extérieur et du matériau intumescent (8) disposé sur un côté radialement intérieur du boîtier extérieur, dans lequel le boîtier comprend au moins deux parties (3, 4, 5) de boîtier coaxiales interconnectées qui comportent au moins des parties d'extrémités qui se chevauchent et qui peuvent coulisser l'une par rapport à l'autre pour augmenter ou réduire la longueur du manchon (1) afin d'ajuster la longueur à une épaisseur de la cloison, au moins une bande (8) de matériau intumescent s'étendant de manière circonférentielle étant disposée sur le côté intérieur de chacune des parties (4, 5) de boîtier situées axialement le plus à l'extérieur, dans lequel le boîtier comprend une partie (3) centrale de boîtier et deux parties (4, 5) de boîtier axialement extérieures qui sont disposées de manière coaxiale et au moins partiellement à l'intérieur de la partie (3) centrale de boîtier, dans lequel les parties (3, 4, 5) de boîtier sont interconnectées par une structure de guidage s'étendant axialement et de manière circonférentielle, qui comprend une butée qui détermine l'extension maximale du manchon (1), ladite structure de guidage incluant au moins une fente (6) de guidage dans la partie (3) centrale de boîtier et une saillie (7) de guidage prévue sur chacune des parties (4, 5) de boîtier extérieures, lesquelles saillies sont agencées de manière coulissante dans la fente (6) de guidage, dans lequel la fente (6) de guidage s'étend à la fois dans la direction axiale et dans la direction circonférentielle.

8. Procédé d'installation d'un manchon (1) coupe-feu selon l'une quelconque des revendications précédentes, dans lequel le manchon (1) coupe-feu est agencé dans un passage existant pour un conduit, un câble ou similaire dans une cloison telle qu'un mur ou un plafond, dans lequel la longueur du manchon (1) coupe-feu est augmentée ou réduite en déplaçant de manière coulissante les parties (3, 4, 5) du manchon les unes par rapport aux autres de manière à ce que la longueur du manchon (1) corresponde sensiblement à l'épaisseur de la cloison.
